# EUROPEAN PATENT APPLICATION

(11) **EP 3 587 851 A1**
(43) Date of publication of application: **01.01.2020**
(21) Application number: 18180558.1
(22) Date of filing: 28.06.2018
(51) Int. Cl.: F16F 1/373, B60R 13/08, F16F 9/30

(54) **MULTILAYER DAMPING MATERIAL**

(71) Applicant: 3M Innovative Properties Company, Saint Paul, MN 55133-3427 (US)
(72) Inventor: Rudek, Mr. David, 40470 Düsseldorf (DE); Eichhorn, Dr. Georg, 32049 Herford (DE); Rohmann, Ms. Anja, 47445 Moers (DE); Gerdes, Mr. Ronald, Saint Paul, Minnesota 55133-3427 (US); Yoo, Mr. Taewook, Saint Paul, Minnesota 55133-3427 (US); Hanschen, Mr. Thomas, Saint Paul, Minnesota 55133-3427 (US); Herdtle, Mr. Thomas, Saint Paul, Minnesota 55133-3427 (US); Lee, Mr. Seungkyu, Saint Paul, Minnesota 55133-3427 (US); Gan, Mr. Kim-Tong, Saint Paul, Minnesota 55133-3427 (US); Schumacher, Dr. Knut, 41472 Neuss (DE); Alexander, Mr. Jonathan, Saint Paul, Minnesota 55133-3427 (US)
(74) Representative: Kurz, Arnd

(57) **Abstract**

Multilayer damping material for damping a vibrating surface (10) comprising:
- at least one constraining layer (4);
- at least one dissipating layer (1, 3);
- at least one kinetic spacer layer (2) comprising multiple spacer elements (2b), the kinetic spacer layer being arranged between the constraining layer and the vibrating surface, when used for damping the vibrating surface, wherein each spacer element has opposite ends, at least one end of each of the multiple spacer elements is embedded in, bonded to, in contact with or in close proximity to the dissipating layer, such that energy is dissipated within the multilayer damping material, through movement of the at least one end of each of the multiple spacer elements;
- absorbing material as at least one additional layer (12) or within at least one of the above layers.

## Description

The invention relates to a multilayer damping material for damping a vibrating surface, in particular to damping material comprising at least one constraining layer, at least one dissipating layer and at least one kinetic spacer layer, and more particularly to such a damping material were the kinetic spacer layer comprises multiple spacer elements. The invention also relates to a multilayer damping material in form suitable for use in damping vibrations and/or noise. And the invention relates to an automobile component comprising a multilayer damping material.

The engine, drive train and other portions of a vehicle (e. g. automobiles, airplanes, motorboats, etc.) can generate mechanical vibrations that propagate through the body of the vehicle as structure borne noise. It can be useful to damp these structural vibrations before their kinetic energy is radiated as air borne noise into other vehicle areas (e. g. inside a passenger compartment).

Typically, one or more applications of viscoelastic materials like bitumen or sprayed plastic masses (i. e. single layer damping material) are coated or otherwise applied onto, e. g. the surface of a body panel of a vehicle for damping these structural vibrations. The deformation of the body panel and attached viscoelastic layer can lead to stretching and/or compressing of the polymer chains within the viscoelastic material, resulting in the dissipation of mechanical energy in the form of, e. g. structural borne vibration (e. g. from the engine, tire/road interactions, compressors, fans, etc.) and the damping of the vibration.

A better damping performance can be achieved by adding a second layer to the damping material, a constraining layer (constrained layer damping - CLD). The constraining layer is selected such that it is not as elastic as the viscoelastic material layer and may be attached on top of the viscoelastic material layer or dissipating layer opposite of the panel to be damped. The constraining layer may for example be made out of aluminium. When the constraining layer is attached on top of the viscoelastic material layer, each deformation of the panel leads not only to stretching and compressing of the polymer chains within the dissipating layer but also to shear within the dissipating layer. Thus, the damping material with an additional constraining layer is more effective than the damping material with only the dissipating layer. The materials used for the constraining layer add weight to the damping material which might be a problem, when used in a vehicle. They may also add bending stiffness to the damping material, which may lead to challenges, when applying the CLD material to complex shaped structures.

The efficiency of damping material can also be enhanced when the deformation of the viscoelastic damping layer or dissipating layer is amplified by a "kinetic spacer" or "stand-off' layer. The stand-off layer is usually arranged between the panel to be damped and the constraining layer, typically with a viscoelastic dissipating layer on one or both sides of it. One way to improve the efficiency is to increase the strain within the dissipating layer(s) by using a kinetic spacer layer.

One example of a commercially available damping material in the E-A-R Brand material ADC-1312 made by Aearo Technologies LLC (Indianapolis, IN) and commercially available from 3M Company, Minnesota, USA. This material includes a polyurethane (PU) foam, which provides excellent performance at low weight and thin aluminium sheet.

Furthermore, slotted stand-off layers are known. Such slots have been found to reduce the bending stiffness or rigidity and the overall mass or weight of the damping material (see for example proceedings of the Society of Photo-Optical Instrumentation Engineers, Vol. 3989 (2000), page 132).

US 2,069,413 discloses a material for damping vibrations of vibratile thin bodies or panels, that is, thin bodies or panels which are inherently capable of free vibration. These materials are used for the purpose of decreasing the noises and disturbing air-throbs within vehicle bodies, when the vehicles are in operation.

US 5,186,996 discloses a sound absorbing multilayer structure for noise reduction in automobiles. The sound-absorbing multilayer structure comprises a flexible material and a high material absorption factor and is made up of a heavy sheet with a viscoelastic support layer tightly connected thereto. The support layer comprises a plurality of angularly constructed support elements. It is essential that the individual support elements be of angular construction, in order to obtain heightened viscoelastic absorptions in the areas of the individual edges of the support element.

WO 2016/205 357 discloses a multilayer damping material for damping a vibrating surface comprising at least one constraining layer, at least one dissipating layer and at least one kinetic spacer layer comprising multiple spacer elements.

Also known are a variety of materials that absorb noise. EP 0 607 946 discloses for example a non-woven acoustic insulation web comprising thermoplastic fibers with an average effective fiber diameter of less than 15 microns, a thickness of at least about 0.5 cm and a density of less than 50 kg/m³. The known web is supposed to exhibit superior acoustical properties namely sound absorption and transmission loss properties, wherein sound absorption relates to the ability of a material to absorb incident sound waves, while transmission loss relates to the ability of a material to reflect incident sound waves.

In view of the above, there is still a need for a damping material that provides highly effective acoustic damping characteristics while being relatively light-weight and exhibiting a low degree of bending stiffness. There is further a need for a damping material that provides highly effective acoustic damping characteristics as well as other properties, like for example thermal insulation properties and/or acoustic absorption properties.

The present invention provides a multilayer damping material for damping a vibrating surface. The damping material comprises at least one constraining layer, at least one dissipating layer as well as at least one kinetic spacer layer with multiple spacer elements. The kinetic spacer layer is arranged between the constraining layer and the vibrating surface, when used for damping the vibrating surface. Each spacer element has opposite ends and at least one end of each of the multiple spacer elements is embedded in, bonded to, in contact with or in close proximity to a dissipating layer, such that energy is dissipated within the multilayer damping material, through movement of the at least one end of each of the multiple spacer elements. The invention further comprises absorbing material as at least one additional layer or within at least one of the above layers.

The multilayer damping material according to the invention provides a damping material or a damping system that is able to dissipate vibration energy within a vibrating surface, e. g. a panel of a vehicle, vessel or appliance body part and/or any part of other machines or systems generation vibrations and/or noise, and also to absorb noise. Furthermore the multilayer damping material according to the invention provides additional properties through the absorbing material, which may for example be acoustic absorption properties.

The dissipating layer is a layer comprising viscoelastic material that is capable of dissipating energy when being formed and/or stressed and or compressed and/or when being exposed to shear and/or strain forces. In other words, the majority of dissipation of energy is due to shear strain within the dissipating layer. It is also possible, that some energy is dissipated in the multiple spacer elements. Generally the properties of the viscoelastic materials may be selected such that they tend to dissipate more energy when subject to shear strain and direct strain. Usually dissipating layers are made out of the following materials: bitumen, butyl, rubber, adhesive or resin compositions based on such materials. The dissipating layer may comprise a thickness between 0.05 and 5 mm, typically between 0.1 and 3 mm, for e. g. automotive applications.

The constraining layer of the multilayer damping material according to the invention is selected such that it is not as elastic as the viscoelastic material of the dissipating layer. The constraining layer may for example be made out of aluminium or any other lightweight, high modulus material, e. g. titanium. Steel, stainless steel, fairly rigid glass mats may be used as constraining layers as well.

When the constraining layer is attached on top of the viscoelastic material layer, each deformation of the panel leads not only to stretching compressing of the polymer chains within the dissipating layer but also to shear within the dissipating layer. According to one exemplary embodiment the multilayer damping material provides two dissipating layers one on each side of the kinetic spacer layer.

The kinetic spacer layer according to the invention fulfils the function of transporting the deformation or vibration of the panel to be damped to the dissipating layer thereby generating an increased strain within the dissipating layer, which increases the damping effect. The dissipating layer may be the dissipating layer mentioned in claim 1 or it may be an additional dissipating layer. The kinetic spacer layers are also known as "stand-off layers and act as a strain magnifier. The kinetic spacer layer according to the invention provides multiple spacer elements that are arranged between the constraining layer and the vibrating surface, when used for damping the vibrating surface. The multiple spacer elements transport the deformation of the panel to be damped into the dissipating layer without adding much bending stiffness to the construction of the multilayer damping material.

In order to be able to transport the deformation or vibration of the panel to be damped into the dissipating layer and dissipate energy, the at least one of the opposite ends of the spacer elements of the kinetic spacer layer are embedded in or bonded to the dissipating layer. While performing this movement strain and/or deformation is caused in the dissipating layer, which results in energy being dissipated within the multilayer damping material. Bonded to the dissipating layer does include direct or indirect bonding to the dissipating layer, which includes embodiments with an additional layer, e. g. a thin film, between the kinetic spacer elements and the dissipating layer. The opposite ends of the kinetic spacer elements are the sides facing the constraining layer or the opposite side facing the panel, in both directions with or without an additional layer in between. Providing a kinetic spacer layer with multiple spacer elements provides weight saving opportunities and enables a bending of the damping material.

The multilayer damping material according to the invention also comprises an absorbing material as at least one absorbing layer or within at least one of the other layers that provides noise reduction properties like absorption and transmission of the multilayer damping material, wherein sound absorption relates to the ability of a material to absorb incident sound waves, while transmission relates to the ability of a material to reflect incident sound waves.

The absorbing material provides additional noise reduction properties to the damping material according to the invention. The absorbing material may absorb noise that functions as oscillating particles. When these oscillating particles move into the absorbing material, the energy of the oscillating particles gets dissipated as heat due to the relative motion of the structure relative to the air within the absorbing material.

With an additional absorbing layer or absorbing material within at least one of the other layers a construction is created that on the one hand provides highly effective acoustic damping characteristics and on the other hand provides additional properties such as for example acoustic absorption properties or depending on the material used for the absorbing material thermal insulation properties. Depending on the application the multilayer damping material is supposed to be used in, the absorbing material can be selected such that it provides the required properties.

The absorbing material or absorbing layer may provide at least a portion with a porous material. The porous material may be an open cell material or a closed cell material, especially when the cells have very thin walls. Typical materials that provide such noise reduction properties and that may be used for the invention are for example spring mass systems like for example foams, e. g. open-cell foams, perforated films, non-woven materials, woven materials, fabrics, felts, textiles, carpets, materials comprising thermoplastic fibers or inorganic (such as for example glass fibers, ceramic fibers or any other kind of inorganic fibers) fibers or a combination thereof, systems comprising glass bubbles or any combination of all of the above mentioned materials.

According to one exemplary embodiment of the invention, the absorbing material may comprise a woven or non-woven material, such as for example a non-woven insulation web or a non-woven acoustic insulation web. The woven or non-woven material may comprise fibers such as thermoplastic fibers or inorganic (such as for example glass fibers, ceramic fibers or any other kind of inorganic fibers) fibers or a combination thereof. It may also comprise thermoplastic melt-blown microfibers and/or thermoplastic crimped bulking fibers. It is further possible, that the thermoplastic fibers of the non-woven insulation comprises fine denier staple fibers.

The absorbing material may comprise a thickness between 1 and 50 mm, preferably 15 to 22 mm. It may also comprise a density between 5 and 50 kg/m³, preferably 15 to 22 kg/m³, such as for example 3M™ Thinsulate™ Acoustic Insulation AU 3002-2 commercially available from 3M Deutschland GmbH, Neuss, Germany. When the 3M™ Thinsulate™ Acoustic Insulation AU 3002-2 is used as absorbing material a multilayer damping material is provided that provides highly effective, light weight damping properties plus acoustic absorption properties, plus thermal insulation properties.

If the absorbing material is a non-woven acoustic insulation web, it may be any non-woven web of thermoplastic fibers which have a certain density, average effective fiber diameter and pressure drop. The web may have a density of about 50 kg/m³ or less, preferably about 20 kg/m³, more preferably about 10 kg/m³ or less; an average effective fiber diameter of about 15 microns or less, preferably about 5 to 10 microns, more preferably about 5 to 8 microns; a thickness of at least about 0.5 cm; and a pressure drop of at least about 1 mm water at a flow rate of about 32 liters/min, preferably at least about 3 mm water, most preferably about 3 to about 10 mm water. The web may be formed by any well-known technique for forming non-woven webs such as air-laying, carding, formation with melt-blown microfibers, wet laying, solvent spinning or melt spinning. The web may also be made with non-woven polymeric microfibers using solution blown techniques.

The effective fiber diameter can be estimated by measuring the pressure drop of air passing through the major face of the web and across the web as outlined in the ASTM F 778-88 test method. As used herein, the term "average effective fiber diameter" means that fiber diameter calculated according to the method set forth in Davis, C.N., "The Separation of airborne Dust and Particles", Institution of Mechanical Engineers, London, Proceeding's 1B, 1952.

The fine denier staple fibers can for example be formed from thermoplastic materials selected from the group consisting of polyolefin, polyester, polyamide, polyurethane, acrylic, polyvinyl chloride, and mixtures thereof. Other types of fibers having higher deniers can be combined with the very fine denier staple fibers in amounts such that the requirements for density, average effective fiber diameter and pressure drop are met. Such other types of fibers can include binder fibers, static discharge fibers, and flame retardant fibers. Further, flame retardant additives and melt additives or dope additives such as fluorochemicals, antioxidants, pigments, light stabilizers, antistats, and inert fillers can also be incorporated into the web.

Preferably, the very fine denier fibers and any other staple fibers are about 15 mm to about 75 mm in length and more preferably about 25 mm to about 50 mm in length, although staple fibers as long as 150 mm could be used. Preferably the web contains at least about 10 weight percent very fine denier staple fibers. It may also comprise at least 20 weight percent very fine denier staple fibers, or at least 30 weight percent very fine staple fibers, or at least 40 weight percent very fine staple fibers. It is also possible that the amount of fine denier staple fibers is higher than 50 weight percent.

The web must have sufficient integrity that it can withstand handling and further processing operations such as calendaring, shaping, cutting and laminating. To achieve this integrity, any of several well-known methods can be used. Such methods, include the use of thermally activated binder fibers in the web, needle-punching and application of binder resin. Other examples of these methods are for example disclosed in EP 0 607 946 A1 (page 5, lines 6 to 18).

Melt-blown microfibers are known to be discontinuous. They are generally about 1 to about 25 microns in diameter. In webs according to the invention, the diameters of the melt-blown microfibers are preferably about 2 to about 15 microns, more preferably about 5 to 10 microns. The melt-blown microfibers can be formed from thermoplastic fiber-forming materials such as polyolefin, e. g., polyethylene, polypropylene or polybutylene, polyesters such as polyethylene terephthalate or polybutylene terephthalate, polyamides such as nylon 6 or nylon 66, polyurethane, or combinations thereof.

Webs of melt-blown microfibers may also contain staple fibers such as crimped bulking fibers. Such crimped bulking fibers have a continuous wavy, curly or jagged character along their length. The number of crimps per unit length can vary rather widely but generally is in the range of about 1 to about 10 crimps/cm, preferably at least about 2 crimps/cm. The size of the crimped bulking fiber can vary widely but generally is in the range of about 1 denier (1.11 x 10⁻⁷ kg/m) to about 100 denier (1.11 x 10⁻⁵ kg/m), preferably about 3 denier (3.33 x 10⁻⁷ kg/m) to about 35 denier (3.89 x 10⁻⁶ kg/m). Typically, the crimped bulking fibers have an average length of about 2 to about 15 cm, preferably about 7 to about 10 cm. The crimped bulking fibers may be made out of polyesters, acrylics, polyolefins, polyamides, polyurethanes, rayons, acetates and mixtures thereof.

The basis weight of the web can vary widely depending on the desired end use for the web but typically, the web will have a basis weight of at least about 150 g/m², more preferably at least about 400 g/m². The thickness of the web can also vary widely but typically is in the range of about 1 and 50 mm, preferably 15 to 22 mm. The thickness of the web whether carded, air-laid, or formed with melt-blown microfibers, can be reduced as necessary to achieve the required density as, for example, by calendaring.

As already mentioned above, the absorbing material may also comprise glass fibers, aramid fibers or meta aramid fibers. Such fibers may comprise any diameter or length that technically makes sense for this application.

According to one exemplary embodiment of the invention, the absorbing material is arranged as an additional absorbing layer on top of the constraining layer. It may be attached to the constraining layer with an adhesive layer. The adhesive layer may be continuous or it may comprise a spotted pattern. Instead of an adhesive layer fastening clips would work as well. The absorbing layer may also be fastened to the rest of the construction via laser, ultrasonic or high frequency welding. It is also possible to position the absorbing material at any other place within the multilayer damping material, such as for example between the constraining layer and the at least one dissipating layer, between the at least one dissipating layer and the kinetic spacer layer, between the kinetic spacer layer and a further dissipating layer, between the further dissipating layer and the vibrating surface.

According to another exemplary embodiment of the invention, the absorbing material is arranged such that it at least partially fills the spaces between the multiple spacer elements of the kinetic spacer layer. This construction is especially space saving, since the additional absorbing material is integrated into the construction and does not need any additional space. Furthermore, this construction provides both damping properties as well as acoustic insulation properties (absorption and transmission as defined above). In addition, such a construction is very dirt resistance and the potential of water absorption is reduced, because the absorbing material is covered by the constraining layer, which has a close surface, which may be an advantage in some applications such as trunk or wheel arch applications.

According to another exemplary embodiment of the invention, the constraining layer, the dissipating layer and/or the base layer of the kinetic spacer layer provide perforations, for example micro-perforation. The perforations may be needled, laser cut or electrobeam cut or drilled or a combination thereof. The perforations may have a diameter in the range of 0.05 mm to 5.00 mm.

The perforations may be positioned such that they build Helmholtz-resonators within the damping material, e. g. connect the spaces around the kinetic spacer elements within the damping material with the space outside of the multilayer damping material. A Helmholtz-resonator is characterized by its resonant properties, which result from a volume or chamber that encloses air, and an opening or neck that connects to the outside fluid. This opening may be a simple through-hole or an extended neck or port. The chamber may be empty except for the air or it may contain a porous low-density material, for example the absorbing material. The air within the chamber functions like a mechanical spring, and the air plug contained in the opening, hole or neck acts as a mass thereby forming a resonant mass-spring system. The energy within the resonating chamber is dissipated primarily by the viscous drag of the oscillating air along the walls of the resonator and primarily in and out of the small openings. Hole diameter, neck length, hole spacing, and cavity volume can all be adjusted to alter the sound absorbing profile. The energy is thus dissipated in the walls and or filling material of the chamber. The filling material of the chamber, e. g. the absorbing material may fulfil an additional effect, it may broaden, the effective bandwidth of the damping material.

According to one exemplary embodiment of the invention, the micro-perforations are arranged such that they connect the space between the kinetic spacer elements with the space around the multilayer damping material. In other words, they are arranged around or between the kinetic spacer elements. Depending on the orientation of the kinetic spacers (orientation towards the vibrating surface or away from the vibrating surface), the micro-perforations may go through the constraining layer, at least one dissipating layer and at least parts of the kinetic spacer layer. By connecting the spaces between the kinetic spacer elements with the space outside of the multilayer damping material Helmholtz-resonators are built inside of the multilayer damping material according to the invention in a very easy and cost-effective way. The Helmholtz-resonators provide additional features for absorbing noise or sound energy and therefore enhance the properties of the multilayer damping material in an unforeseeable manner.

According to one exemplary embodiment of the invention, the kinetic spacer elements may be arranged such to separate the constraining layer from the dissipating layer. In such an embodiment, the kinetic spacer layer or elements would need to be attached to the constraining layer with an additional adhesive layer. This could for example be any kind of adhesive layer that does not provide any or only little viscoelastic properties, such as for example epoxy resin. It is also possible to have an embodiment of a multilayer damping material according to the invention where the kinetic spacer layer is directly bonded to the vibrating surface and the dissipating layer is arranged between the spacer layer and the constraining layer.

According to one exemplary embodiment of the invention, the dissipating layer may be arranged such as to separate the constraining layer from the kinetic spacer layer.

According to an exemplary embodiment of the invention, the spacer elements may be embedded in the dissipating layer such that 0 to 100 % of the spacer element is embedded in the dissipating layer.

The kinetic spacer elements may be arranged a) equally spaced apart from each other within the kinetic spacer layer, b) homogeneously or uniformly at locations within the kinetic spacer layer, c) in-homogeneously or non-uniformly at locations within the kinetic spacer layer or d) any combination of a), b) and c. Being equally spaced apart from each other may mean that each and every spacer element comprises the same distance to the adjacent spacer element or elements. One example of such equally spaced apart kinetic spacer elements are spacer elements that are arranged in rows and columns, wherein the rows and columns are equally spaced apart from each other. Being arranged homogeneously or uniformly at locations within the kinetic spacer layer may mean that the kinetic spacer elements are arranged within a pattern, wherein the pattern is repeated over and over again within the kinetic spacer layer. The kinetic spacer elements within the pattern may or may not be equally spaced apart from each other. It is also possible that the kinetic spacer elements are randomly arranged within the kinetic spacer layer. There may for example be areas, where the kinetic spacer elements are equally spaced apart from each other and areas, where they are not equally spaced apart from each other.

The kinetic spacer elements may be a) uniformly shaped and sized, b) non-uniformly shaped and sized, c) cylindrical pyramidal, barrel or spherical shaped, or d) any combination of a), b) and c). Being uniformly shaped and sized means that all kinetic spacer elements or all groups of kinetic spacer elements have the same shape and the same size. It is also possible that the kinetic spacer elements are non-uniformly shaped and sized. For example, it is possible that all the kinetic spacer elements within one kinetic spacer layer comprise a different shape and/or size than all other kinetic spacer elements within this one kinetic spacer layer. It is also possible that some of the shapes and/or sizes of the kinetic spacer elements repeat within one kinetic spacer layer. The kinetic spacer elements may have any kind of suitable shape, such as for example the shape of a cylinder, a pyramid, a barrel and/or they may be spherically shaped. The kinetic spacer elements of the above mentioned shapes or of any other shape may be hollow or solid. The kinetic spacer elements may have a cross-sectional area that is round, oblong, polygonal, or a combination of the mentioned cross sectional area geometry. The spacer elements may be taped on both sides, like a barrel or the figure "8". They may also have concave portions. They may further contain void areas - for example locally via glass bubbles or regionally via design, e. g. hollow, pipe or tube as mentioned above. They may comprise walls and a core out of a different material. The walls may for example be harder than the core. The kinetic spacer layer may also comprise large glass beads or bubbles instead of the spacer elements. Or they may comprise grains of sand. They may also be made out of ceramic materials.

The vertical axis of the kinetic spacer elements may be arranged perpendicular (90°) to the plane of the dissipating layer. It is of course also possible that the vertical axis of the kinetic spacer elements is tilted within an angle of 25° to 90° relative to the plane of the dissipating layer.

The kinetic spacer element may also comprise at least one cap on at least one end, e. g. the end facing the constraining layer and/or the end facing the vibration surface. The kinetic spacer element may also comprise two caps, one on each end of the kinetic spacer element. It is also possible that more than one kinetic spacer element are connected to at least one common cap. It is also possible that more than one kinetic spacer element are connected to two common caps, one on each end of the kinetic spacer elements. The common caps on both ends of the kinetic spacer elements may connect different kinetic spacer elements on the top as on the bottom or they may connect the same kinetic spacer elements on both sides. All the above mentioned embodiments and examples may be combined with each other.

According to another embodiment of the invention, the kinetic spacer elements may comprise the shape of an I-beam, X-beam or an H-beam. The various lines of the letters could also be curved. The spacer elements with the above describes shapes could be arranged such as to be seen from a side view or also from a top view.

According to another embodiment of the invention, the multilayer damping material comprises a base layer, wherein the kinetic spacer elements extend out of the base layer. The base layer may comprise the function of a support layer for the kinetic spacer elements. The base layer may be made out of the same material as the kinetic spacer elements. Such an embodiment provides the advantage of being able to make the base and the kinetic spacer layer within one production step, which saves time and costs. One possible way of making such kinetic spacer elements is micro-replication technology, rapid prototyping or additive manufacturing. Other ways of manufacturing the kinetic spacer layer and the kinetic spacer elements are molding, embossing, or corrugating. It is also possible that the base layer and the kinetic spacer layer with the kinetic spacer elements are made out of different materials.

According to another embodiment of the invention, the kinetic spacer elements are an integral part of the base layer. The kinetic spacer elements may be for example formed together within one production step or they may be bonded to the base layer within a separate production step.

Generally all known materials are possible for making the kinetic spacer elements. According to one embodiment of the invention, the kinetic spacer elements may comprise at least one of the following materials: ceramic, glass, metal such as for example aluminium, carbon, clay, foamed PU, plastics such as for example thermoplastic materials such as for example polyester, polypropylene, polyethylene, acrylonitrile butadiene styrene (ABS), nylon. The base layer may be made out of a different material than the kinetic spacer elements as well.

According to another embodiment of the invention, the kinetic spacer elements may comprise more than one material. They may comprise any combination of the above mentioned list of materials. The materials described above may be formulated into a master batch having the desired properties. Another example of a multi-material kinetic spacer element according to the invention may be a spacer element comprising a spacer element out of one material and a thin layer of another material at one and/or two ends thereof. The material of the thin layer may for example be a viscoelastic material capable of dissipating energy. The thickness of the thin layer may for example be 3 µm. The kinetic spacer elements may also provide a sheath/core composition, meaning that the core of the kinetic spacer elements have a different composition than the sheath of the kinetic spacer element. The kinetic spacer elements may also provide a layered construction wherein the layers may comprise different materials. It is possible that the kinetic spacer elements provide two or more different materials in each of the above described embodiments. The kinetic spacer elements may also comprise glass bubbles integrated into the construction of the elements.

The kinetic spacer elements may - driven by the needs of the customer - comprise a height in the range of 0.1 - 15 mm.

According to another embodiment of the invention the base layer may comprise at least one of the following materials: acrylate, polypropylene, polyester. The base layer may also comprise a combination of the mentioned materials

The base layer may comprise a thickness within the range of 0 mm (no base layer present) to 3 mm.

The ratio of the height of the kinetic spacer elements to the height/thickness of the base material may be for example greater than 1.1/1, greater than 10/1 and greater than 20/1.

According to another embodiment of the invention the base layer may comprise a netting or a film. The netting or the film may be embedded into a material. But it is also possible that the base layer only comprises the netting or the film. The netting or the film may be spread within the entire base layer or it may be arranged in certain areas only. The base layer may also comprise a nonwoven material.

The base layer may comprise a) apertures and/or slits, b) is continuous or discontinuous or c) any combination of a) and b). A base layer with apertures and/or slits may be optimized regarding weight, since it may comprise less material than a multilayer damping material with a base layer without apertures and/or slits. If the base layer comprises a netting or a film with apertures, the apertures may be the apertures of the netting or the film. The kinetic spacer elements may be arranged between the apertures. It is also possible, that the kinetic spacer elements cover the apertures or slits of the base layer at least partially. The apertures or slits may also provide additional damping or absorption properties as described above with reference to the micro-perforations.

The dissipating layer may be a) continuous or discontinuous, b) discontinuous and located only on the one end of the multiple spacer elements, c) comprise apertures and/or slits or d) any combination of a), b) and c). The dissipating layer of the multilayer damping material may comprise apertures and/or slits. The dissipating layer may also comprise spots, blotches and/or islands. The invention also covers embodiments, where the dissipating layer only comprises a little island on the end of each of the kinetic spacer elements, where they contact their adjacent layer, e. g. the constraining layer or the vibrating surface. This embodiment may be optimized regarding weight, since it may comprise less material than a multilayer damping material with a dissipating layer without apertures or slits. The apertures or slits may also provide additional damping or absorption properties as described above with reference to the micro-perforations.

The constraining layer may be a) continuous or discontinuous, b) arranged adjacent to, and in contact with at least one dissipating layer (1, 3), c) continuously or discontinuously in contact with at least one dissipating layer (1, 3), or d) any combination of a), b) and c). According to another embodiment of the invention, the constraining layer may comprise apertures and/or slits which again provides a potential for weight savings. The constraining layer may be continuously or discontinuously in contact with the dissipating layer. The constraining layer may be arranged adjacent to and in contact with a dissipating layer. The dissipating layer may be the dissipating layer of claim 1 or it may be any additional dissipating layer of the multilayer damping material. The constraining layer may be arranged on the opposite side of the dissipating layer as the kinetic spacer layer. The constraining layer may be continuously or discontinuously in contact with a dissipating layer. Constraining layer constructions are already known in the prior art - see also description of the background art above - and provide the advantage of additionally introducing a shear within the dissipating layer which leads to a more effective damping. The apertures or slits may also provide additional damping or absorption properties as described above with reference to the micro-perforations.

The multilayer damping material according the invention may be in a form suitable (i. e., dimensioned, designed and/or configured) for use in damping vibrations and/or noise within a) a vehicle such as for example an automobile, truck, aircraft, train, ship, vessel or boat, b) an appliance such as for example washing machine, dish washer etc., c) any other machine or system comprising a machine such as for example a generator system, elevator or air handling system, or d) any combination of a), b) and c).

The invention also refers to an automobile component comprising a multilayer damping material according to any of the above described embodiments. The automobile component comprising this multilayer damping material may for example be any part of the entire body, such as for example car roof, door panel, front-of-dash, floor panel. It might for example be useful to place the multilayer damping material according to the invention in a close proximity to a vibration source such as for example an engine of a vehicle.

The invention will now be described in more detail with reference to the following Figures exemplifying particular embodiments of the invention:
- Fig. 1A: is a cross-sectional and schematic view of a multilayer constrained damping material in a not deformed stage;
- Fig. 1B: is a cross-sectional and schematic view of a multilayer constrained damping material in a deformed stage;
- Fig. 2: is a cross-sectional and schematic view of a multilayer constrained damping material with a kinetic spacer layer;
- Fig. 3: is a cross-sectional and schematic view of one embodiment of a multilayer damping material according to the invention;
- Fig. 4: is a cross-sectional and schematic view of another embodiment of a multilayer damping material according to the invention;
- Fig. 5: is a cross-sectional and schematic view of another embodiment of a multilayer damping material according to the invention;
- Fig. 6: is a cross-sectional and schematic view of another embodiment of a multilayer damping material according to the invention;
- Fig. 7: is a cross-sectional and schematic view of another embodiment of a multilayer damping material according to the invention;
- Fig. 8: is a cross-sectional and schematic view of another embodiment of a multilayer damping material according to the invention and
- Fig. 9 to: Fig. 22 are schematic views of embodiments of stems of the kinetic spacer layer of a multilayer damping material according to the invention.

Herein below various embodiments of the present invention are described and shown in the drawings wherein like elements are provided with the same reference numbers. Additional teachings of the invention are also described below.

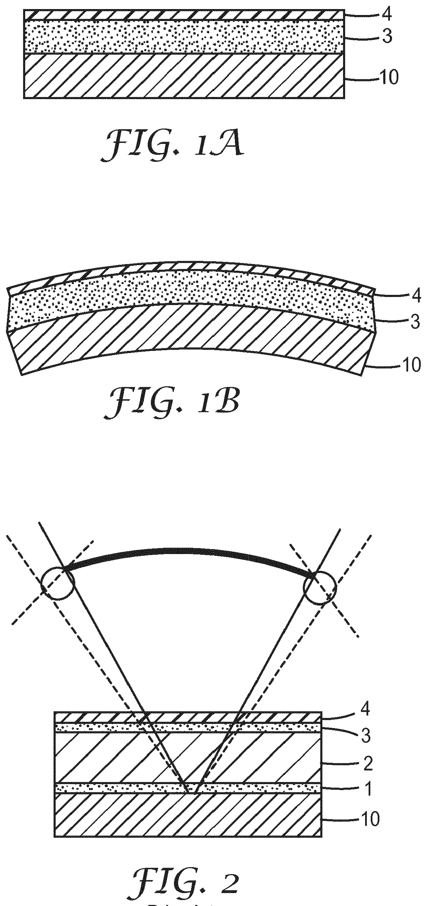

Figure 1 is a cross-sectional schematic view of a multilayer constrained damping material according to the prior art with a panel 10 that is the component to be damped or the vibrating surface. The damping material itself comprises a dissipating layer 3 and a constraining layer 4. The dissipating layer 3 may comprise a viscoelastic material and the constraining layer 4 may comprise a material that is not as elastic as the dissipating layer 3. When the constraining layer 4 is attached to the dissipating layer, each deformation in the panel 10 leads not only to stretching and compressing in the dissipating layer but also to shear (see Fig. 1B). Thus, a damping material with an additional constraining layer is more effective as damping materials with only a dissipating layer.

Figure 2 is a cross-sectional and schematic view of a multilayer constrained damping material according to the prior art with a kinetic spacer layer 2. The Figure shows again a panel 10, which is the component to be damped or the vibrating surface. The multilayer damping material comprises a first dissipating or adhesive layer 1, a kinetic spacer layer 2, a second dissipating layer 3 and a constraining layer 4. The kinetic spacer layer 2 transports the deformation of the panel 10 into the dissipating layer 3. Because of the lever effect the deformation of the dissipating layer 3 gets increased, thus the stretching, compressing and shear caused in the dissipating layer gets increased as well. Thus, the kinetic spacer layer 2, increases the strain in the dissipating layer 3. One example of a kinetic spacer layer material used in the prior art is PU foam.

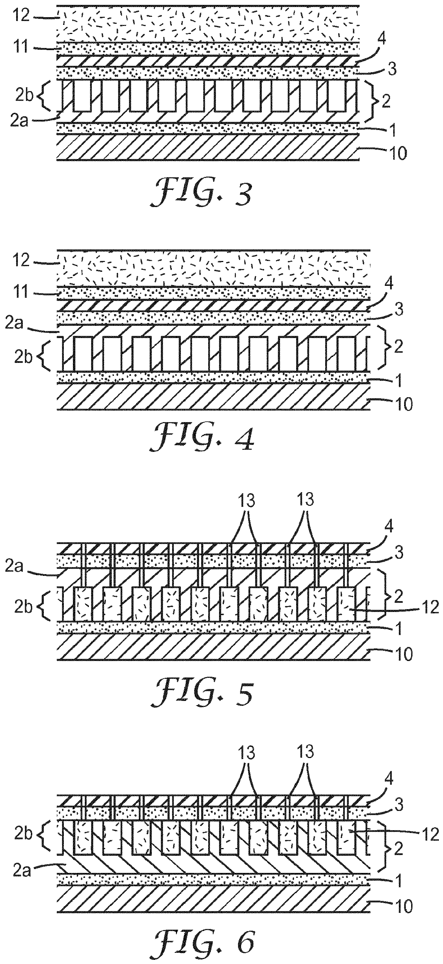

Figure 3 is a cross-sectional and schematic view of one embodiment of a multilayer damping material according to the invention. Figure 3 shows again a panel 10, the component to be damped or vibration surface. The multilayer damping material according to the invention comprises in that order a first dissipating layer 1, next to the panel 10, a kinetic spacer layer 2, a second dissipating layer 3, a constraining layer 4, an adhesive layer 11 and an absorbing layer 12. The adhesive layer 11 may comprise a spotted pattern. Instead of an adhesive layer fastening clips would work as well. The absorbing layer 12 may also be fastened to the rest of the construction via laser, ultrasonic or high frequency welding depending on the materials used for the absorbing layer 12 and the constraining layer 4. The kinetic spacer layer 2 comprises a base layer 2a and multiple spacer elements 2b extending from the base layer 2a. The base layer 2a is arranged adjacent to the first dissipating layer 1 whereby the multiple spacer elements 2b are extending into the direction of the second dissipating layer 3 (pins up). Providing a kinetic spacer layer 2 with multiple spacer elements 2b provides the advantage of a) saving weight compared to a spacer layer with a homogeneous kinetic spacer layer and b) providing the possibility of bending the multilayer damping material according to the invention. The additional absorbing layer 12 may for example comprise a non-woven insulation web. Other materials as listed above in the general part of the description may also be used for the absorbing layer 12. The absorbing layer 12 may provide an additional absorption of noise that functions as follows: noise entering the absorbing layer 12 functions as oscillating air particles. When these oscillating air particles move along the fibers within the absorbing layer 12, the energy of the oscillating particles gets dissipated as heat due to the relative motion of the fibers and the air within the absorbing layer 12. The more fibers an air particle encounters the more friction is generated and the more energy is dissipated. The efficiency of dissipation may also depend on other factors such as for example on the fiber size. In general, the finer the fibers or the structure of the acoustic damping material, the better the acoustic absorption.

Figure 4 is a cross-sectional and schematic view of another embodiment of the multilayer damping material according to the invention. Figure 4 shows again a panel 10, the component to be damped. The multilayer damping material according to the invention comprises in that order a first dissipating layer 1 next to the panel 10, a kinetic spacer layer 2, an optional second dissipating layer 3, a constraining layer 4, an adhesive layer 11 and an absorbing layer 12, as in the embodiment shown in Figure 3. For other options or modifications of the adhesive layer see according passage of the description of Figure 3. If the second dissipating layer 3 is not used, it can be desirable for the constraining layer 4 and the base layer 2a to be bondable to one another, e. g. by being fused together using applied heat, friction, etc. or otherwise secured relative to one another, e. g. with mechanical fastener(s). The kinetic spacer layer also comprises a base layer 2a and multiple spacer elements 2b extending from the base layer 2a. The difference between the embodiment shown in Figure 3 and in the embodiment shown in Figure 4 is the orientation of the multiple spacer elements 2b and the base layer 2a relative to the other layers of the multilayer damping material. In Figure 3 the spacer elements face the constraining layer and in Figure 4 they face the vibrating surface. The embodiment of Figure 4 may be advantageous compared to the embodiment of Figure 3 in the areas of flexibility and easiness of conforming the construction to shaped surfaces. The base layer 2a is arranged adjacent the second dissipating layer 3, whereby the multiple spacer elements 2b are extending into the direction of the first dissipating layer 1 (pins down). The additional absorbing layer 12 may comprise a non-woven insulation web. It may provide an additional absorption of noise that functions as follows: noise entering the acoustic absorbing layer 12 functions as oscillating air particles. When these oscillating air particles move along the fibers within the acoustic absorbing layer 12, the energy of the oscillating air gets dissipated as heat due to relative motion of the fibers and air within the absorbing layer 12. The more fibers an air particle encounters the more friction is generated and the more energy is dissipated. The finer the fibers or the structure of the acoustic damping material, the better the acoustic absorption. The acoustic absorption may also be influenced by other parameters such as for example the size if the fibers.

Figure 5 shows again a panel 10, the component to be damped. In this embodiment the multilayer damping material according to the invention comprises in that order a first dissipating layer 1 next to the panel 10, a kinetic spacer layer 2 with an absorbing material 12, an optional second dissipating layer 3 and a constraining layer 4. Different from the embodiments described above, the acoustic absorbing material 12 is arranged such, that it fills at least partially the spaces between the kinetic spacer elements 2b. The absorbing material 12 is thus placed between and around the kinetic spacer elements 2b. The absorbing material 12 may for example be 3M™ Thinsulate™ Acoustic Insulation AU 3002-2. In addition, the constraining layer 4 as well as the second dissipating layer 3 and the base layer 2a of the kinetic spacer layer 2 are provided with micro-perforated spaces (holes) 13. The micro-perforated spaces (holes) 13 are arranged around the spacer elements 2b such that little Helmholtz-resonators are build using the spaces between the spacer elements 2b. In addition, the Helmholtz-resonators are filled with the material of the absorbing layer 12. The Helmholtz-resonators function as described in the general part of the description. The micro-perforated spaces may receive noise, which will be guided through the construction towards the absorbing layer 12 around the kinetic spacer elements 2b. The absorbing layer 12 may absorb the noise in the same way as described above.

Thus, the embodiment shown in Figure 5 provides a construction with excellent damping properties. In addition, the embodiment shown in Figure 5 shows acoustic absorption properties without adding anything to the dimensions (thickness) to the product. Depending on the material used for the acoustic absorbing material 12, the embodiment shown in Figure 5 may also provide enhanced thermal insulating properties, e. g. when 3M™ Thinsulate™ Acoustic Insulation AU 3002-2 is used as absorbing material 12.
Figure 6 shows again a panel 10, the component to be damped. In this embodiment the multilayer damping material according to the invention comprises in that order a first dissipating layer 1 next to the panel 10, a kinetic spacer layer 2 with an absorbing material 12, an optional second dissipating layer 3 and a constraining layer 4. As in the embodiment described with reference to Figure 5, the acoustic absorbing material 12 is arranged such, that it fills at least partially the spaces between the kinetic spacer elements 2b. The absorbing material 12 is thus placed between and around the kinetic spacer elements 2b. In addition, the constraining layer 4 as well as the second dissipating layer 3 are provided with micro-perforated spaces (holes) 13. The micro-perforated spaces (holes) 13 are arranged around the spacer elements 2b such that little Helmholtz-resonators are build using the spaces between the spacer elements 2b. In addition, the Helmholtz-resonators are filled with the material of the absorbing material 12. The Helmholtz-resonators function as described in the general part of the description. The micro-perforated spaces may receive noise, which will be guided through the construction towards the absorbing material 12 around the kinetic spacer elements 2b. The absorbing material 12 may absorb the noise in the same way as described above. The construction of Figure 6 provides the same advantages as the construction described with reference to Figure 5. The only difference between the two embodiments might be that the construction shown in Figure 5 is more flexible.

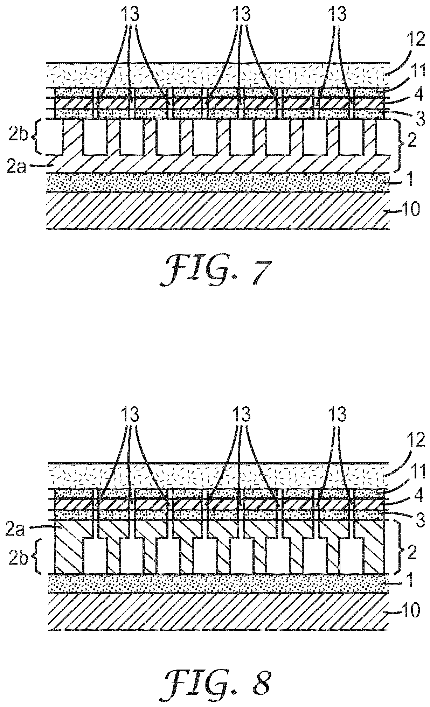

Figure 7 shows a cross-sectional and schematic view of another embodiment of the multilayer damping material according to the invention. Figure 7 shows again a panel 10, the component to be damped. The multilayer damping material according to the invention comprises in that order a first dissipating layer 1 next to the panel 10, a kinetic spacer layer 2, an optional second dissipating layer 3, a constraining layer 4, an adhesive layer 11 and an absorbing layer 12. For modifications of the absorbing layer 11 or alternative solutions see general part of the description. The absorbing layer 12 is thus placed on top of the construction as in the embodiment shown in Figure 3. In addition, the adhesive layer 11, the constraining layer 4 as well as the second dissipating layer 3 are provided with micro-perforated spaces (holes) 13. The micro-perforated spaces (holes) 13 are arranged such that they end in the spaces between the spacer elements 2b of the kinetic spacer layer 2. It is possible that in the embodiment shown in Figure 7, the spaces between the kinetic spacer elements 2b are filled with absorbing material as shown in Figure 5 or 6.

The embodiment shown in Figure 7 provides excellent damping properties. In addition, due to the additional acoustic absorbing layer 12 it provides absorbing properties. The absorbing properties are enhanced compared to the embodiment shown in Figure 3 due to the micro-perforated spaces (holes) 13 that function as Helmholtz-resonators. If noise doesn't get absorbed by the acoustic absorbing layer 12 and travels through the entire absorbing layer 12, it will reach the micro-perforated spaces 13 and will get dissipated therein, which leads to an enhanced absorption effect.

Figure 8 shows a further cross-sectional and schematic view of another embodiment of the multilayer damping material according to the invention. Figure 8 shows again a panel 10, the component to be damped. The multilayer damping material according to the invention comprises in that order a first dissipating layer 1 next to the panel 10, a kinetic spacer layer 2, an optional second dissipating layer 3, a constraining layer 4, an adhesive layer 11 and an absorbing layer 12. For modifications of the absorbing layer 11 or alternative solutions see general part of the description. The absorbing layer 12 is thus placed on top of the construction as in the embodiment shown in Figure 3. In addition, the adhesive layer 11, the constraining layer 4 as well as the second dissipating layer 3 and the base layer 2a of the kinetic spacer layer 2 are provided with micro-perforated spaces (holes) 13. The micro-perforated spaces (holes) 13 are arranged such that they end in the spaces between the spacer elements 2b of the kinetic spacer layer 2. It is possible that in the embodiment shown in Figure 8, the spaces between the kinetic spacer elements 2b are filled with absorbing material as shown in Figure 5 or 6.

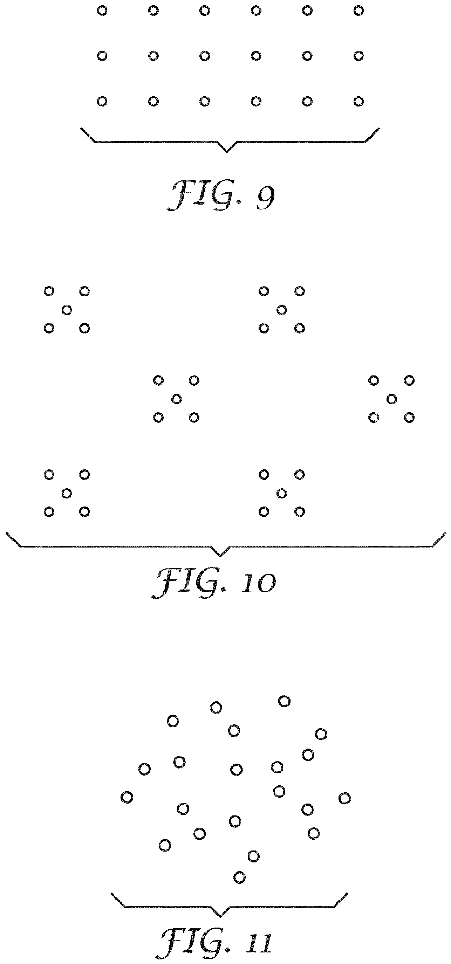

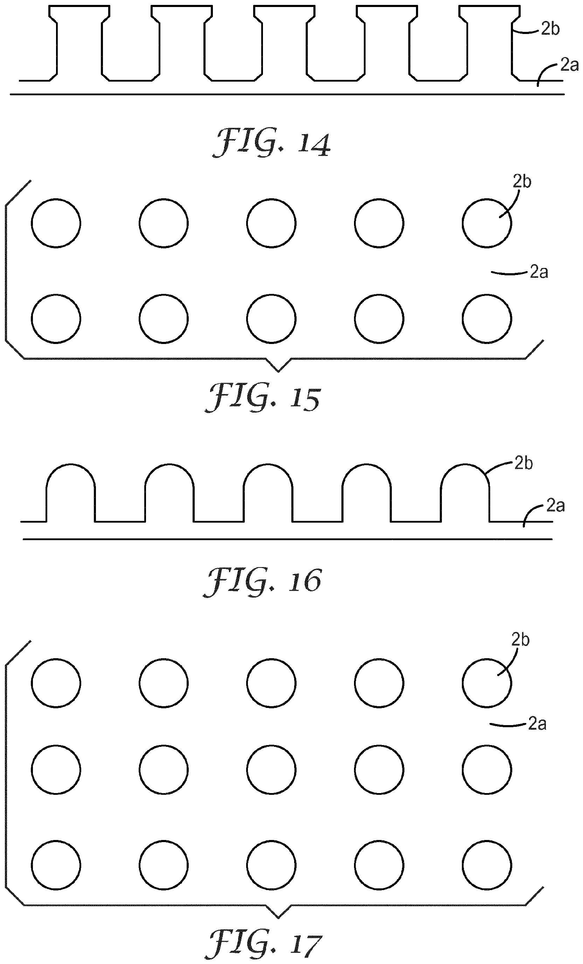

The following Figures 9 to 22 are schematic top-views of kinetic spacer layers with multiple kinetic spacer elements being arranged in different ways. In Figure 9, they are arranged equally spaced apart from each other. In Figure 10, they are arranged homogeneously or uniform at locations within the kinetic spacer layer. Here they are arranged within groups of five kinetic spacer elements. In Figure 11, they are arranged in-homogeneously or non-uniformly at locations within the kinetic spacer layer. Here they are arranged randomly. It can be desirable for a kinetic spacer layer 2 of the invention to have kinetic spacer elements 2b arranged in transverse rows that are slanted off of the width direction W by an angle (e. g., of about 20° as shown in Figure 17).

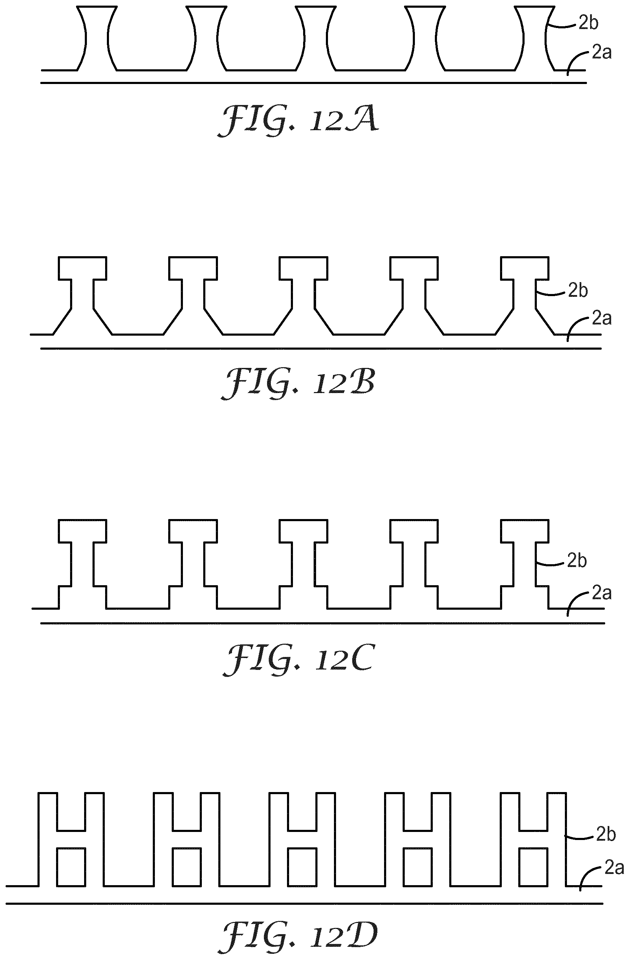

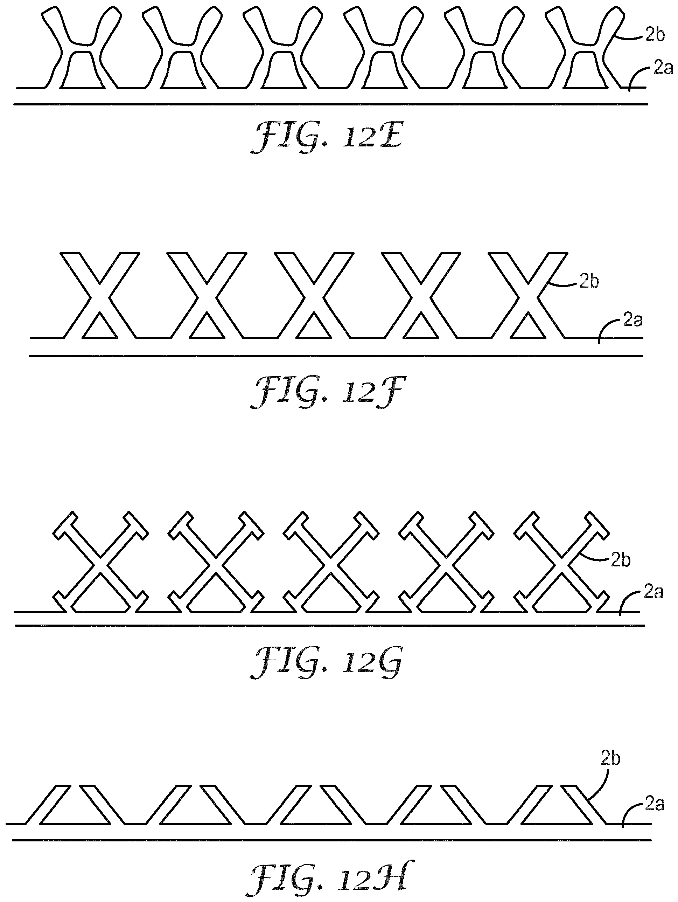

Figures 12A through 12H show schematic side-views of possible kinetic spacer elements of the kinetic spacer layer 2b. As can be seen from the drawings, a lot of different shapes are possible, such as for example different I-shaped, H-shaped, or x-shaped kinetic spacer elements, as well as other shapes such as, for example, spherical-shaped kinetic spacer elements (not shown), which could be solid or thin walled hollow glass, ceramic or plastic beads. The kinetic spacer elements are shown as one homogenous body, but as already described above it is also possible to make them out of more than one material. All the shown shapes can be varied, like varying the size, dimension, make the outer skins more round etc. They may also be hollow.

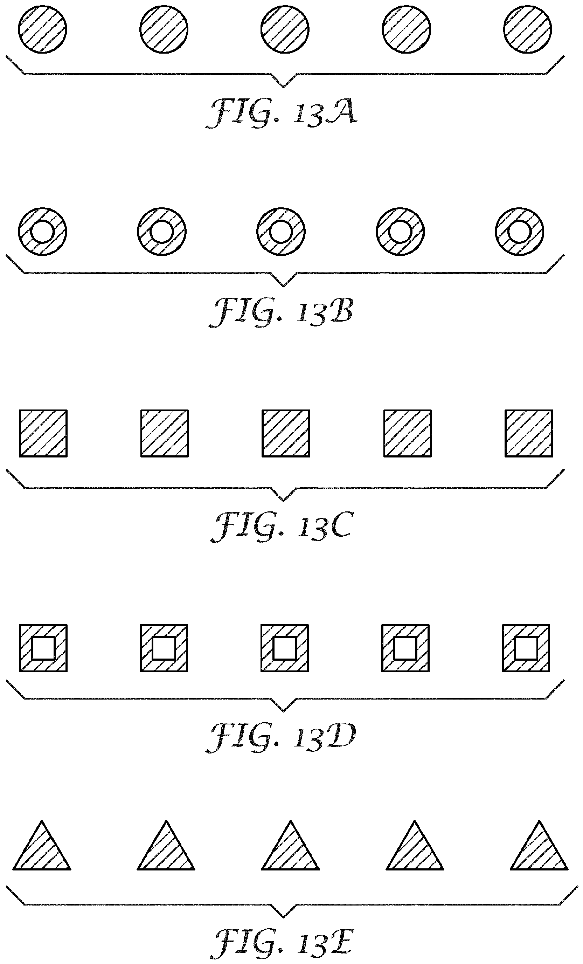

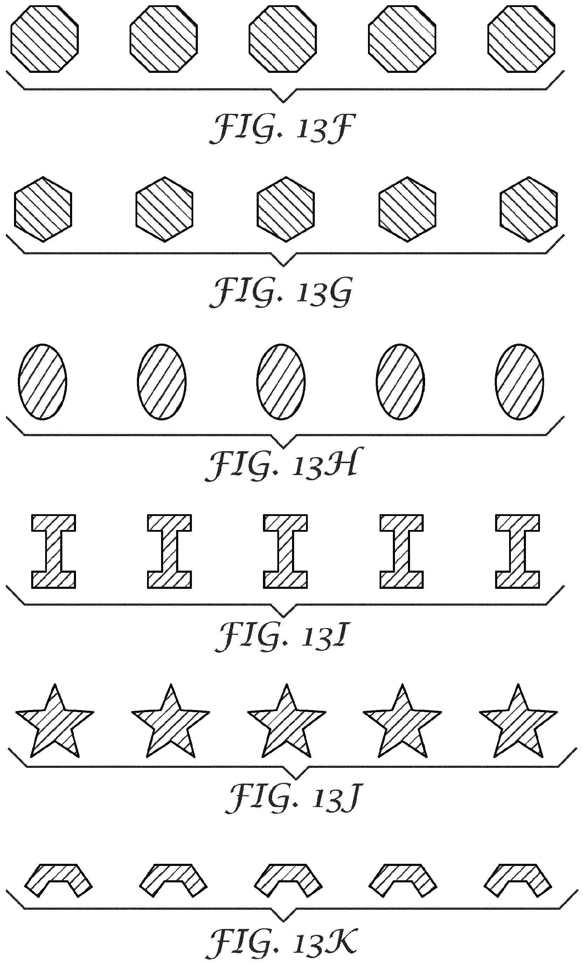

Figures 13A thorough 13K show schematic top-views of possible kinetic spacer elements of the kinetic spacer layer 2b. As can be seen from the drawings, a lot of different cross-sectional shapes are possible, like circle, square, hexagon, octagon, triangle, odd-shaped polygon, star-shaped kinetic spacer elements. The kinetic spacer elements may be filled or hollow (e. g., tubular). They may be filled with the same material as the outer sheath forming the spacer element or they may be filled with a different material (e. g., a material that provides additional damping characteristics).

Figure 14 is a side-view of an additional kinetic spacer layer according to the invention with I-shaped kinetic spacer layer elements extending from a base layer. As can be seen in Figure 15, they are equally space apart from each other.

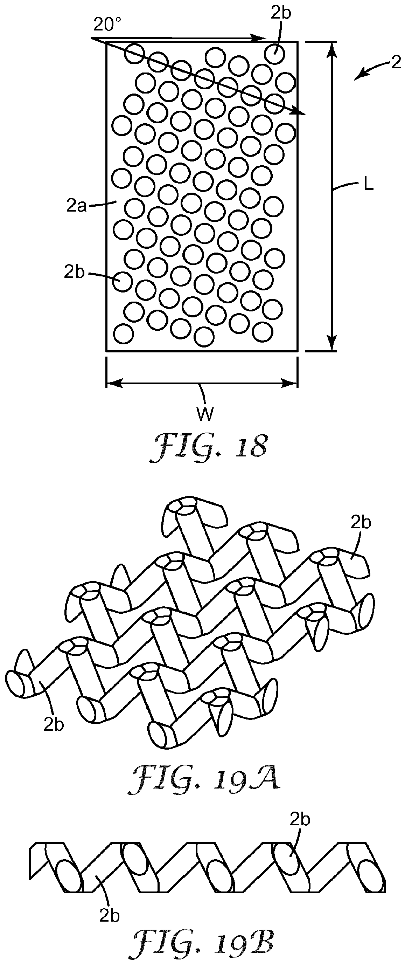

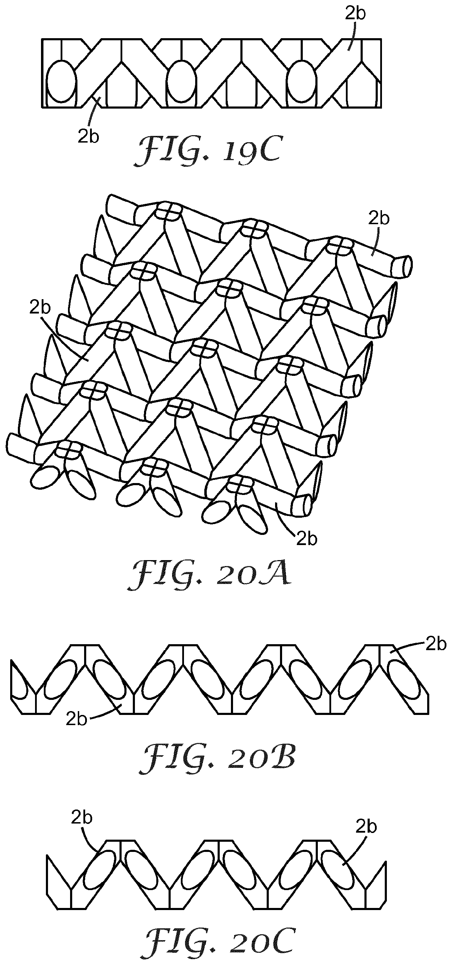

Fig. 16 is a side-view of an additional kinetic spacer layer according to the invention with cylindrical kinetic spacer elements extending from a base layer. The kinetic spacer elements comprise a round top end. It may be desirable to cap the round top end of each of the spacer elements of this kinetic spacer layer, for the reasons discussed above. As can be seen in Figure 19, they are equally spaced apart from each other.

Figures. 18A-18C are views of another embodiment of kinetic spacer elements of the kinetic spacer layer according to the invention, where each of the spacer elements 2b are tilted at an angle of about 45° in groups of three adjacent elements 2b. The three spacer elements 2b of each group are joined together at one of their ends (e. g., by adhesive or heat fusing) to form a tripod shape. These groups of three spacer elements 2b are joined to each other at their other ends.

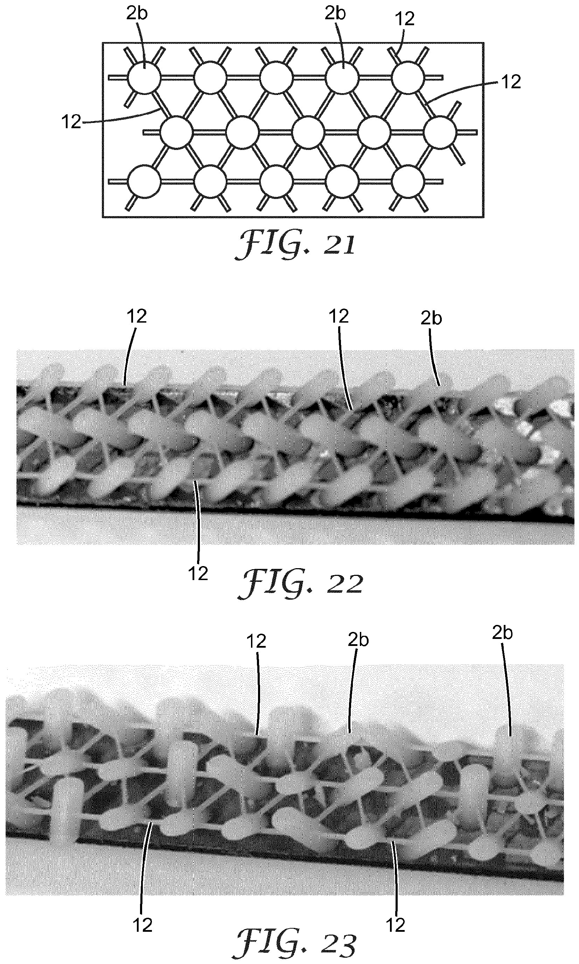

Figures 19A to 19C are schematic views of another embodiment of kinetic spacer elements of the kinetic spacer layer according to the invention, where each of the spacer elements 2b are tilted at an angle of about 45° in groups of four adjacent elements 2b. The four spacer elements 2b of each group are joined together at one of their ends (e. g., by adhesive or heat fusing) to form a shape similar to the tripod shape of the Figure 23 embodiment. These groups of four spacer elements 2b are likewise joined to each other at their other ends.

Fig. 20 is a schematic top view of an embodiment of a kinetic spacer layer with perpendicular spacer elements 2b that are each joined to their adjacent spacer elements 2b by relatively thin connector pins or rods 12. The connector pins 12 are shown located midway along the length of each spacer element 2b, but pins 12 can be located at any desired point along the length of each spacer element 2b.

Fig. 21 is a schematic top view of an embodiment of a kinetic spacer layer with multiple rows of slanted spacer elements 2b that are each tilted at an angle of about 45° and joined together by connector pins or rods 12. Adjacent rows of the spacer elements 2b are tilted in opposite directions. The connector pins 12 are shown located midway along the length of each spacer element 2b, but pins 12 can be located at any desired point along the length of each spacer element 2b.

Fig. 22 is a schematic top view of an embodiment of a kinetic spacer layer with randomly angled spacer elements 2b that are joined together by connector pins or rods 12. The connector pins 12 are shown located midway along the length of each spacer element 2b, but pins 12 can be located at any desired point along the length of each spacer element 2b.

All the above described spacer elements and spacer layers may be combined with an absorbing layer according to the invention. All the embodiments described with reference to Fig. 3 to 8 may comprise any of the shapes disclosed in Fig. 9 to 22 or any combination of the shapes disclosed in Fig. 9 to 22.

## Claims

1. Multilayer damping material for damping a vibrating surface (10) comprising:
- at least one constraining layer (4);
- at least one dissipating layer (1, 3);
- at least one kinetic spacer layer (2) comprising multiple spacer elements (2b), the kinetic spacer layer being arranged between the constraining layer and the vibrating surface, when used for damping the vibrating surface, wherein each spacer element has opposite ends, at least one end of each of the multiple spacer elements is embedded in, bonded to, in contact with or in close proximity to the dissipating layer, such that energy is dissipated within the multilayer damping material, through movement of the at least one end of each of the multiple spacer elements
- absorbing material as at least one additional layer (12) or within at least one of the above layers..

2. Multilayer damping material according to claim 1, wherein the absorbing material or layer (12) comprises at least a portion with a porous material.

3. Multilayer damping material according to claim 1 or 2, wherein the absorbing material or layer (12) comprises a foam, a woven or non-woven material, the woven or non-woven material comprising thermoplastic or inorganic fibers or a combination of any of the before mentioned materials.

4. Multilayer damping material according to claim 3, wherein the thermoplastic fibers comprise melt-blown microfibers, crimped bulk fibers and/or fine denier staple fibers.

5. Multilayer damping material according to any of the preceding claims, wherein the absorbing material or layer (12) is arranged on top of the constraining layer (4).

6. Multilayer damping material according to any of the preceding claims, wherein the absorbing material or layer (12) is arranged such that it at least partially fills spaces between the multiple spacer elements (2b) of the kinetic spacer layer (2).

7. Multilayer damping material according to any of the preceding claims, wherein the kinetic spacer layer (2) is arranged such as to separate the constraining layer (4) from the dissipating layer (1, 3), or the dissipating layer (1, 3) is arranged such as to separate the constraining layer (4) from the kinetic spacer layer (2).

8. Multilayer damping material according to any of the preceding claims, wherein the kinetic spacer layer (2) comprises a base layer (2a), wherein the kinetic spacer elements (2b) extend out of the base layer.

9. Multilayer damping material according to claim 8, wherein the base layer (2a) comprises a) apertures and/or slits, b) is continuous or discontinuous or c) any combination of a) and b).

10. Multilayer damping material according to any of the preceding claims, wherein the dissipating layer (1, 3) is a) continuous or discontinuous, b) discontinuous and located only on the one end of the multiple spacer elements (2b), c) comprises apertures and/or slits or d) any combination of a), b) and c).

11. Multilayer damping material according to any of the preceding claims, wherein the constraining layer (4) is a) continuous or discontinuous, b) arranged adjacent to, and in contact with at least one dissipating layer (1, 3), c) continuously or discontinuously in contact with at least one dissipating layer (1, 3), or d) any combination of a), b) and c).

12. Multilayer damping material according to any of the preceding claims, wherein the constraining layer (4), the dissipation layer (1, 3) and/or the base layer (2a) of the kinetic spacer layer (2) provide(s) perforations, for example micro perforations.

13. Multilayer damping material according to claim 12, wherein the perforations are arranged such that they connect the space between the spacer elements with the space around the multilayer damping material.

14. Multilayer damping material according to any of the preceding claims in form suitable for use in damping vibrations and/or noise within a) a vehicle, b) an appliance, c) any other machine or system comprising a machine, or d) any combination of a), b) and c).

15. An automobile component comprising a multilayer damping material according to any of the preceding claims, wherein the component is a car roof, door panel, front-of-dash, or floor panel.
